(19) Europäisches Patentamt
European Patent Office
Office européen des brevets

(11) **EP 4 239 330 B1**

(12) **EUROPEAN PATENT SPECIFICATION**

(45) Date of publication and mention
of the grant of the patent:
**26.11.2025 Bulletin 2025/48**

(21) Application number: **22193873.1**

(22) Date of filing: **05.09.2022**

(51) International Patent Classification (IPC):
**G01N 29/44** *(2006.01)*    **G01N 29/14** *(2006.01)*
**G01N 29/46** *(2006.01)*

(52) Cooperative Patent Classification (CPC):
**G01N 29/14; G01N 29/4472; G01N 29/46;**
G01N 2291/011; G01N 2291/015; G01N 2291/0232;
G01N 2291/0258; G01N 2291/0289

(54) **STRUCTURE EVALUATION SYSTEM AND STRUCTURE EVALUATION METHOD**

STRUKTURBEURTEILUNGSSYSTEM UND STRUKTURBEURTEILUNGSVERFAHREN

SYSTÈME D'ÉVALUATION DE STRUCTURE ET PROCÉDÉ D'ÉVALUATION DE STRUCTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2022 JP 2022033726**

(43) Date of publication of application:
**06.09.2023 Bulletin 2023/36**

(73) Proprietors:
• **KABUSHIKI KAISHA TOSHIBA**
  **Minato-ku**
  **Tokyo**
  **105-0023 (JP)**
• **Kyoto University**
  **Kyoto-shi, Kyoto 606-8501 (JP)**

(72) Inventors:
• **Usui, Takashi**
  **Tokyo, 105-0023 (JP)**

• **Watabe, Kazuo**
  **Tokyo, 105-0023 (JP)**
• **Shiotani, Tomoki**
  **Kyoto-shi, Kyoto, 606-8501 (JP)**

(74) Representative: **Hoffmann Eitle**
**Patent- und Rechtsanwälte PartmbB**
**Arabellastraße 30**
**81925 München (DE)**

(56) References cited:
**JP-A- 2006 010 595**

• **BEHNIA ARASH ET AL: "Advanced structural
health monitoring of concrete structures with the
aid of acoustic emission", CONSTRUCTION AND
BUILDING MATERIALS, ELSEVIER,
NETHERLANDS, vol. 65, 22 May 2014
(2014-05-22), pages 282 - 302, XP028874356,
ISSN: 0950-0618, DOI: 10.1016/
J.CONBUILDMAT.2014.04.103**

**Description**

FIELD

Embodiments described herein relate generally to a structure evaluation system and a structure evaluation method.

BACKGROUND

In recent years, problems associated with the aging of structures such as bridges constructed during the period of high economic progress have become apparent. The damage caused by an accident in a structure is immeasurable, so techniques for monitoring the condition of the structure have been proposed. For example, a technique for detecting damage to a structure by an acoustic emission (AE) method in which a high-sensitivity sensor detects elastic waves generated by the generation of internal cracks or the progress of internal cracks has been proposed. AE is an elastic wave generated by the progress of cracks in the material. In the AE method, an elastic wave is detected as an AE signal (voltage signal) by an AE sensor using a piezoelectric element. The AE signal is detected as a sign before the eventual fracture of the material occurs. Therefore, the frequency of occurrence of the AE signal and the signal intensity are useful as indicators of the soundness of the material. Therefore, research is being conducted on techniques for detecting signs of deterioration of structures by the AE method.

As one of the evaluation methods for the soundness of structures based on the AE method, an evaluation method using a b-value derived from an empirical rule known as the Gutenberg-Richter rule in the field of seismology is known. The b-value is an evaluation value obtained by the slope of an amplitude scale-based frequency distribution, and is known to have a correlation with the crack state inside the material. The life of a structure such as a bridge is generally said to be 50 years. Monitoring the soundness of structures over a long period of several years to several tens of years is essential for building a safe and secure society. In particular, it is desired to detect signs of deterioration inside the structure before large-scale damage occurs. Long-term monitoring of structures based on the AE method is considered to be promising for early detection of deterioration signs.

However, when the evaluation of the deterioration state of the structure based on the b-value in the AE method is applied to the long-term monitoring of an actual bridge, the evaluation accuracy of the deterioration state may decrease if there is a period when data cannot be obtained. Such a problem is not limited to the b-value, and also occurs when another evaluation value (improved b-value) obtained by the slope of an amplitude scale-based frequency distribution is used. BEHNIA ARASH ET AL, "Advanced structural health monitoring of concrete structures with the aid of acoustic emission", CONSTRUCTION AND BUILDING MATERIALS, ELSEVIER, NETHERLANDS, (20140522), vol. 65, doi:10.1016/J.CONBUILDMAT.2014.04.103, ISSN 0950-0618, pages 282 - 302, XP028874356 gives a comprehensive review of the acoustic emission technique for its applications in concrete structure health monitoring.

BRIEF DESCRIPTION OF THE DRAWINGS

FIG. 1 is a diagram showing a configuration of a structure evaluation system according to an embodiment.
FIG. 2 is a schematic block diagram showing a function of a signal processing device according to an embodiment.
FIG. 3 is a schematic block diagram showing a function of AFE according to an embodiment.
FIG. 4 is a schematic block diagram showing a function of a signal processing unit according to an embodiment.
FIG. 5 is a sequence diagram showing a flow of processing related to the accumulation of detection information in the structure evaluation system according to the embodiment.
FIG. 6 is a flowchart showing a processing flow of a structure evaluation apparatus according to an embodiment.
FIG. 7 is a diagram showing an example of an analysis result using b-value data for an evaluation target period.
FIG. 8 is an example of a contour diagram complemented based on a Voronoi diagram.

DETAILED DESCRIPTION

The present invention provides a structure evaluation system according to claim 1 and a structure evaluation method according to claim 11 capable of improving the evaluation accuracy of a deterioration state of a structure when performing long-term monitoring of the structure using an evaluation value obtained by the slope of an amplitude scale-based frequency distribution.

According to one embodiment, a structure evaluation system according to an embodiment includes a plurality of sensors, an acquirer, a calculator, and an evaluator. The plurality of sensors detects elastic waves generated from the structure. The acquirer acquires detection information for an evaluation target period in which information on at least an amplitude of each elastic wave detected by each of the plurality of sensors is associated with time information on the time when each elastic wave is detected. The calculator calculates an evaluation value, which is a slope of an amplitude scale-based frequency distribution of elastic waves, every predetermined period based on the acquired detection information for the evaluation target period. The evaluator evaluates a deterioration state of the structure based on the time-series data of each evaluation value calculated every predetermined period.

Hereinafter, a structure evaluation system and a structure evaluation method according to an embodiment will be described with reference to the drawings.

(Overview)

A structure evaluation system according to an embodiment is a system capable of improving the evaluation accuracy of a deterioration state of a structure when performing long-term monitoring of the structure using an evaluation value (for example, b-value) obtained by the slope of an amplitude scale-based frequency distribution. Specifically, first, the structure evaluation system collects elastic waves generated by an impact applied to a structure such as a bridge for at least a period to be evaluated (hereinafter referred to as "evaluation target period"). Next, the structure evaluation system estimates a trend component and a seasonality component using an additive regression model based on a b-value every predetermined period obtained based on the collected elastic waves for the evaluation target period. Then, the structure evaluation system evaluates the trends of long-term damage (for example, cracking) of the structure based on the estimated trend component, and evaluates the presence or absence of stable existing cracks based on the seasonality component.

The impact applied to the structure is, for example, an impact applied to the structure when a vehicle travels on the structure and the tires make contact with the road surface. The evaluation target period in the present embodiment is at least one year or more, more preferably two years or more. Here, the reason for setting the above period as the evaluation target period will be described. In general, the material of a structure undergoes expansion and contraction with temperature changes. Therefore, from a broad perspective, damage (for example, cracks) that is stably present inside the structure tends to repeat a periodic motion in which it opens in the hot summer and closes in the winter. Depending on the direction of the damage, the damage may close in a hot summer and open in the winter. In any case, periodic annual fluctuations suggest the existence of existing cracks that open and close under the influence of temperature. On the other hand, the long-term trend of the b-value can be considered to be related to the continuous enlargement or progress of cracks. For example, the b-value tends to decrease as cracking increases or progresses. In order to analyze this, it is effective to use measurement data for one year or more in which periodicity appears. Furthermore, in order to more clearly separate seasonality and trends, it is desirable to use measurement data for two years or more in which periodicity is repeated.

Next, a method of obtaining the b-value used in the present embodiment will be described. In the field of seismology, it is said that there is a relationship between the magnitude indicating the scale of the epicenter and the logarithmic frequency as shown in Equation (1) below, which is known as the Gutenberg-Richter law.

$$\log_{10} N(M) = a - bM = a - b\left(\log_{10} A\right) \qquad \cdots (1)$$

In Equation (1), N(M) represents the number of events having a magnitude of M or more, and a and b represent constants. Usually, the magnitude M is the logarithm of the amplitude A. The constant b is called the "b-value" and is said to reflect structural inhomogeneity and stress systems. Many attempts have been made to apply this to the AE method and evaluate the soundness of a structure based on the b-value. When the amplitude of an elastic wave, which is usually expressed in decibels, is used, Equation (1) is expressed as Equation (2).

$$\log_{10} N(A_{dB}) = a - b^* A_{dB} = a - b\left(20 \log_{10} A\right) \qquad \cdots (2)$$

From the relationship between Equations (1) and (2), a value obtained by multiplying the slope (that is, the b*-value of Equation (2)) calculated using the amplitude of elastic waves by 20 in order to achieve consistency with the b-value in seismology is used as the b-value in the present embodiment. As the number of samples n for obtaining the b-value, n=50 is appropriate in the verification by a test piece. When targeting elastic waves generated by traffic loads, a lot of noise is contained, so it is more robust to use a larger number of samples. Therefore, in the present embodiment, in consideration of the fluctuation of the data depending on the number of samples, it is assumed that the number of samples n=500, which is 10 times the recommended value, is used to obtain one b-value. The number of samples is not limited to 500. For example, with the influence of noise possibly being included, the number of samples may be 50 or more as in the case of verification by a test piece.

Next, the estimation of the trend component and the seasonality component performed in the present embodiment will be described.

The measurement of elastic waves has the following characteristics. As a first characteristic, the frequency of elastic wave detection is not regular, and elastic wave data may not be obtained over a long period of time. This is because the vehicles traveling on the structure are irregular. The second characteristic is seasonality (annual fluctuation) due to temperature changes and traffic volume. The third characteristic is that the fluctuation ranges are large. As a method for extracting a trend based on an appropriate b-value from elastic wave data having such characteristics, an additive regression model considering an interval linear trend and seasonality can be used. First, b^(t) is introduced as an estimated value of the b-value, and a model is assumed as in Equation (3). In addition, "^" is denoted above b (the same applies hereinafter).

$$\hat{b}(t) = g(t) + s(t) + \varepsilon t \qquad \cdots \ (3)$$

In Equation (3), g(t) represents a trend component, s(t) represents a seasonality component (annual fluctuation), and $\varepsilon t$ represents an error. The trend component g(t) can be expressed as Equation (4) as an interval linear model having S change points.

$$g(t) = (k + a(t)^T \delta)t + (m + a(t)^T \gamma) \qquad \cdots \ (4)$$

In Equation (4), k represents a growth rate and m represents an offset parameter. A correction coefficient vector $\delta \in R^S$ has a correction coefficient $\delta_j$ of the slope at the change point $s_j$ (j = 1,..., S) as an element. A vector $a(t) \in \{0,1\}^S$ and a vector $\gamma \in R^S$ that guarantees continuity are defined by Equation (5).

$$a_j(t) = \begin{cases} 1, & t \geqq s_j, \\ 0, & otherwise, \end{cases} \qquad \cdots \ (5)$$

$$\gamma_j = -s_j \delta_j$$

The seasonality component can be expressed as Equation (6) as a Fourier series when the data is daily data and the seasonality component is annual fluctuation.

$$s(t) = \sum_{n}^{N} \left( a_n \cos\left(\frac{2\pi n t}{365.25}\right) + b_n \sin\left(\frac{2\pi n t}{365.25}\right) \right) \qquad \cdots \ (6)$$

In Equation (6), N is the number of parameters, and for example, N=10 can be used, but the present invention is not limited thereto. In the present embodiment, the b-value is calculated for each set of 500 elastic waves, converted into daily data using a calculated b-value, and fitted to Equation (3) by an arbitrary algorithm whereby the trend component and the seasonality component can be separated and extracted. For example, it is preferable to use the Limited memory Broyden Fletcher Goldfarb Shanno algorithm (L-BFGS) method, which is a kind of quasi-Newton method, because good fitting results can be obtained with a small amount of memory. Although not limited to estimation methods such as maximum likelihood estimation, Bayesian estimation, and maximum a posteriori (MAP) estimation, good results can be obtained by MAP estimation even when the amount of observed value data is small.

Hereinafter, a specific configuration of the present embodiment will be described.

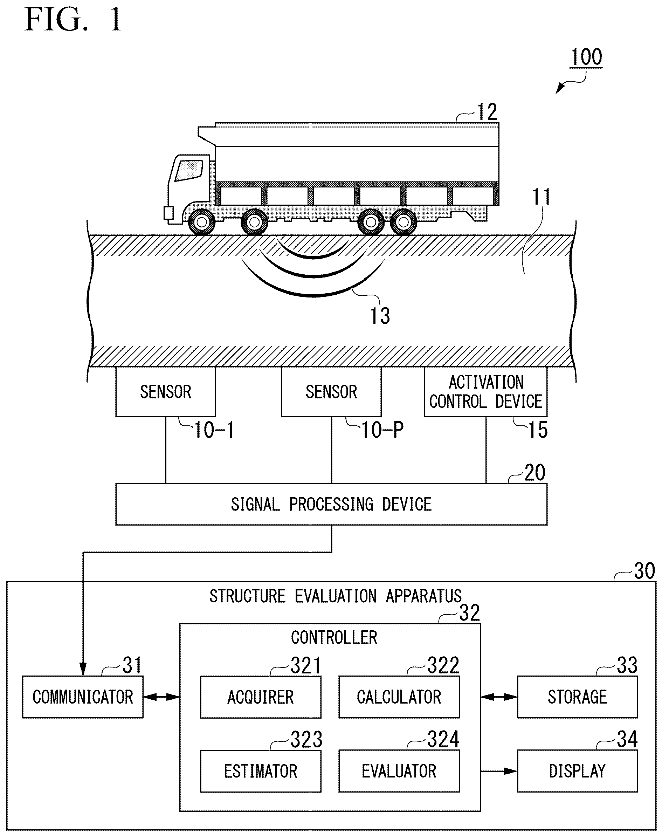

FIG. 1 is a diagram showing a configuration of a structure evaluation system 100 according to an embodiment. The structure evaluation system 100 is used to evaluate the soundness of the structure 11. **In** the following description, evaluation means determining the degree of soundness of the structure 11, that is, the deterioration state of the structure 11 is based on certain criteria. In the following description, a bridge made of concrete will be described as an example of the structure 11, but the structure 11 does not have to be limited to a bridge. The structure 11 may be any structure as long as elastic waves 13 are generated due to the generation or progress of cracks or an external impact (for example, rain, artificial rain, or the like). For example, the structure 11 may be a bedrock. The bridge is not limited to a structure erected on a river or a valley, and also includes various structures (for example, a viaduct on a highway) provided above the ground.

Damage that affects the evaluation of the deterioration state of the structure 11 includes damage inside the structure 11 that hinders the propagation of elastic waves 13 such as cracks, cavities, and sedimentation. Here, the cracks include vertical cracks, lateral cracks, diagonal cracks, and the like. A vertical crack is a crack generated in the direction perpendicular to the surface of the structure 11 in which sensors are installed. A lateral crack is a crack generated in the lateral direction on the surface of the structure 11 in which sensors are installed. A diagonal crack is a crack that occurs in a direction other than the directions horizontal and perpendicular to the surface of the structure 11 in which sensors are installed. Sedimentation is deterioration in which concrete changes to a sediment-like form mainly at the boundary between asphalt and a concrete deck.

Hereinafter, a specific configuration of the structure evaluation system 100 will be described.

The structure evaluation system 100 includes a plurality of sensors 10-1 to 10-P (P is an integer of 2 or more), an activation control device 15, a signal processing device 20, and a structure evaluation apparatus 30. Each of the plurality of sensors 10-1 to 10-P and the signal processing device 20 are connected by wire. The activation control device 15 and the signal processing device 20 are connected by wire. The signal processing device 20 and the structure evaluation apparatus 30 are connected by wire or wirelessly. In the following description, when the sensors 10-1 to 10-P are not distinguished, the sensors will be described as the sensor 10.

As shown in FIG. 1, when a vehicle 12 passes over the structure 11, a load is applied to the road surface due to the contact between the tires of the vehicle 12 and the road surface. Due to the deflection due to the load, a large number of elastic waves 13 are generated in the structure 11. Each sensor 10 installed on the lower surface of the structure 11 can detect the elastic waves 13 generated in the structure 11.

The sensor 10 detects the elastic waves 13 generated from inside the structure 11. For example, the sensor 10 detects an elastic wave 13 generated by the vehicle 12 passing through the structure 11. The sensor 10 is installed at a position where the elastic wave 13 can be detected. For example, the sensor 10 is installed on a surface different from the surface on which the load is applied to the structure 11. When the surface on which the load is applied is the road surface of the structure 11, the sensor 10 is installed on either the side surface or the bottom surface of the structure 11. The sensor 10 converts the detected elastic wave 13 into an electric signal (AE signal). In the following description, a case where the sensor 10 is installed on the bottom surface of the structure 11 will be described as an example. Here, the plurality of sensors 10-1 to 10-P are arranged on the bottom surface of the structure 11 at different intervals in the vehicle traveling direction and the direction orthogonal to the vehicle traveling direction. The region surrounded by the plurality of sensors 10-1 to 10-P is an evaluation target region of the structure 11.

For the sensor 10, for example, a piezoelectric element having sensitivity in the range of 10 kHz to 1 MHz is used. A more suitable sensor 10 is a piezoelectric element having a sensitivity of 100 kHz to 200 kHz. The sensor 10 may be of a type such as a resonance type having a resonance peak within a frequency range and a wideband type in which resonance is suppressed, but the sensor 10 may be of any type. The method of the sensor 10 detecting the elastic wave 13 includes that of a voltage output type, a resistance change type, a capacitance type, and the like, but any detection method may be used. The sensor 10 may include an amplifier.

An accelerometer may be used instead of the sensor 10. In this case, the accelerometer detects the elastic wave 13 generated in the structure 11. The accelerometer converts the detected elastic wave 13 into an electric signal by performing the same processing as the sensor 10.

Like the sensor 10, the activation control device 15 is installed on a surface different from the surface on which the load is applied to the structure 11. The activation control device 15 is a sensor that detects the approach of the vehicle 12, and an accelerometer can be used. The approach of a vehicle can be detected from the acceleration generated by the passage of the vehicle 12. A micro electro mechanical system (MEMS) accelerometer is suitable from the viewpoint of low power consumption. When the activation control device 15 detects the approach of the vehicle 12, the activation control device 15 outputs an activation signal for putting the signal processing device 20 into an operating mode to the signal processing device 20. Putting the signal processing device 20 into the operating mode means causing the signal processing device 20 to perform signal processing. That is, the signal processing device 20 does not perform signal processing on the elastic wave 13 until the activation signal is acquired from the activation control device 15. As a result, the power consumption of the signal processing device 20 can be suppressed.

The signal processing device 20 has a plurality of modes, an operating mode and a hibernation mode, and shifts to the operating mode based on the activation signal output from the activation control device 15. The hibernation mode is a mode in which the power consumption is smaller than that in the operating mode with limited functions. The signal processing device 20 is in the hibernation mode until it shifts to the operating mode. The hibernation mode may be, for example, a state in which signal processing is not performed even if the device is activated, a sleep state, or a stopped state in which the power is turned off.

When the signal processing device 20 shifts to the operating mode, the signal processing device 20 receives the electric signal output from the sensor 10. The signal processing device 20 performs signal processing on the input electric signal. The signal processing performed by the signal processing device 20 is, for example, noise removal, determination of arrival time, parameter extraction, and the like. The signal processing device 20 stores the detection information for at least an evaluation target period in which the information on the elastic wave 13 obtained by the signal processing is associated with the time information on the time when each elastic wave 13 is detected. The signal processing device 20 may store the detection information for a period longer than the evaluation target period. The signal processing device 20 transmits the detection information for the requested evaluation target period to the structure evaluation apparatus 30 in a divided or collective manner as transmission data, for example, in response to a request from the structure evaluation apparatus 30.

The signal processing device 20 is configured using an analog circuit or a digital circuit. The digital circuit is implemented by, for example, a field programmable gate array (FPGA) or a microcomputer. Using a non-volatile FPGA, power consumption during standby can be suppressed. The digital circuit may be implemented by a dedicated large-scale integration (LSI). The signal processing device 20 may include a non-volatile memory such as a flash memory or a removable memory.

The structure evaluation apparatus 30 evaluates the deterioration state of the structure 11 using the transmission data for the evaluation target period transmitted from the signal processing device 20.

The structure evaluation apparatus 30 includes a communicator 31, a controller 32, a storage 33, and a display 34.

The communicator 31 receives the transmission data for the evaluation target period transmitted from the signal processing device 20. For example, the communicator 31 receives the transmission data for the evaluation target period by requesting the signal processing device 20 for the transmission data for the evaluation target period in response to an instruction from the outside. The communicator 31 outputs the received transmission data for the evaluation target period to the controller 32.

The controller 32 controls the entire structure evaluation apparatus 30. The controller 32 is configured using a processor such as a central processing unit (CPU) and a memory. By executing the program, the controller 32 functions as an acquirer 321, a calculator 322, an estimator 323, and an evaluator 324.

Some or all of the functional units of the acquirer 321 and the calculator 322, the estimator 323 and the evaluator 324 may be implemented by hardware (circuit unit; including circuitry) such as application specific integrated circuit (ASIC), a programmable logic device (PLD), and FPGA, and may be implemented by the cooperation of software and hardware. The program may be recorded on a computer-readable recording medium. The computer-readable recording medium is, for example, a non-transitory storage medium such as a portable medium such as a flexible disk, a magneto-optical disk, a ROM, or a CD-ROM, or a storage device such as a hard disk built in a computer system. The program may be transmitted over a telecommunication line.

Some of the functions of the acquirer 321 and the calculator 322, the estimator 323, and the evaluator 324 do not need to be mounted on the structure evaluation apparatus 30 in advance, and may be implemented when an additional application program is installed on the structure evaluation apparatus 30.

The acquirer 321 acquires various types of information. For example, the acquirer 321 acquires the transmission data for the evaluation target period received by the communicator 31. The acquirer 321 stores the acquired transmission data for the evaluation target period in the storage 33.

The calculator 322 calculates the b-value every predetermined period based on the transmission data for the evaluation target period stored in the storage 33. The b-value is one aspect of the evaluation value.

The estimator 323 estimates the trend component and the seasonality component using the time-series data of each b-value. Specifically, the estimator 323 estimates the trend component and the seasonality component by applying the additive regression model represented by Equation (3) as described above. The estimator 323 estimates the trend component by the interval linear model and the seasonality component by the Fourier series.

The evaluator 324 evaluates the deterioration state of the structure 11 based on the time-series data of each b-value calculated every predetermined period. Specifically, the evaluator 324 evaluates that damage is progressing in the structure 11 when the trend component estimated by the estimator 323 is on a downward trend. When the seasonality component estimated by the estimator 323 fluctuates periodically, the evaluator 324 evaluates that a crack with a low progress is present inside the structure 11. A crack with a low progress is a damage that can be regarded as not requiring immediate action at this time, although it is damage.

The storage 33 stores the transmission data for the evaluation target period acquired by the acquirer 321 and the sensor position information. The sensor position information includes information regarding the installation position of the sensor 10 in association with the sensor ID. The sensor position information may be, for example, information on latitude and longitude on the structure 11, or information such as horizontal and vertical distances from a specific position of the structure 11. The storage 33 is configured using a storage device such as a magnetic hard disk device or a semiconductor storage device.

The display 34 displays information according to the control of the controller 32. For example, the display 34 displays the evaluation result of the evaluator 324. The display 34 is an image display device such as a liquid crystal display or an organic electro luminescence (EL) display. The display 34 may be an interface for connecting the image display device to the structure evaluation apparatus 30. In this case, the display 34 generates a video signal for displaying a specific result, and outputs the video signal to the image display device connected to the display 34.

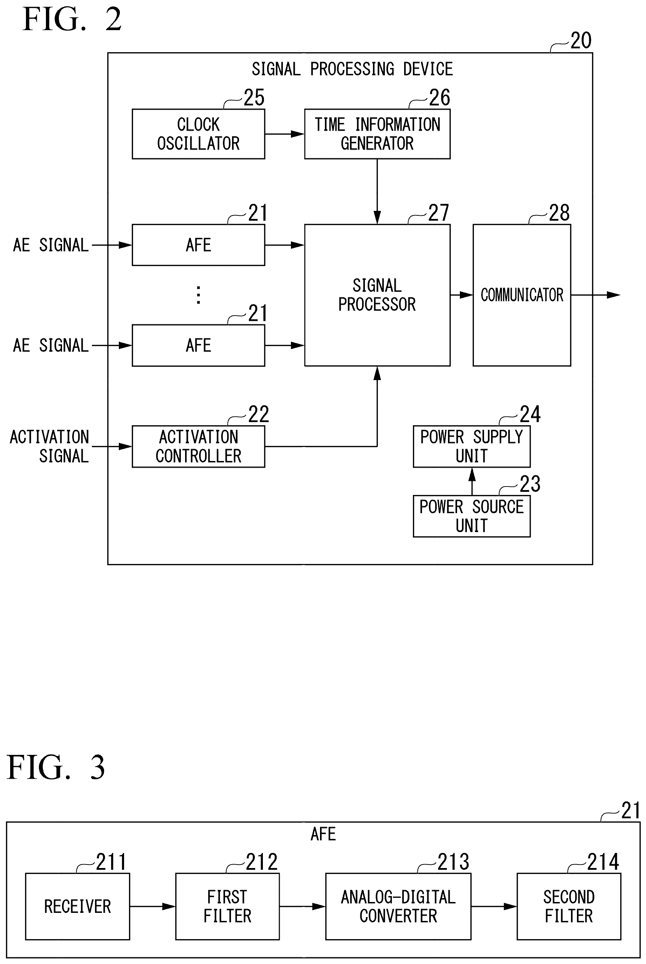

FIG. 2 is a schematic block diagram showing the functions of the signal processing device 20 according to the embodiment. The signal processing device 20 includes a plurality of analog front ends (AFE) 21, an activation controller 22, a power source unit 23, a power supply unit 24, a clock oscillator 25, a time information generator 26, a signal processor 27, and a communicator 28.

The AFE 21 performs filter processing and analog-digital conversion processing on the AE signal output from the sensor 10. The AFE 21 outputs the signal after the filter processing and the analog-digital conversion processing to the signal processor 27.

When the activation controller 22 acquires the activation signal from the activation control device 15, the activation controller 22 puts the signal processor 27 into the operating mode.

The power source unit 23 supplies the electric power supplied by the power supply unit 24. The power source unit 23 is any one of a primary battery, a secondary battery, a solar cell, an energy harvester, and the like.

The power supply unit 24 supplies the electric power obtained from the power source unit 23 to the entire signal processing device 20 or a part of the functional unit of the signal processing device 20.

The clock oscillator 25 generates a clock signal. The clock oscillator 25 is, for example, a crystal oscillator. The clock oscillator 25 outputs the generated clock signal to the time information generator 26.

The time information generator 26 receives the clock signal input from the clock oscillator 25. The time information generator 26 generates time information using a clock signal. The time information generator 26 is, for example, a counter having a register. That is, the time information generator 26 counts the edges of the clock signal and stores the cumulative count value from the time when the power of the signal processing device 20 is turned on in the register as time information. The bit length k of the time information (register) is determined by one or more integers k satisfying $k \geq y/dt$ based on the measurement duration y of the structure 11 and the time resolution dt. The time resolution dt is determined by $dt=dr/v$ based on the propagation velocity v of the elastic wave 13 and the position information resolution dr of the source of the elastic wave 13. As a result, the accuracy of specifying the position of the source of the elastic wave 13 can be set in an arbitrary range, and the signal processing device 20 can specify the necessary and sufficient position. For example, when the material of the structure 11 is iron, the propagation velocity v of the elastic wave 13 is 5950 [m/s]. In this case, assuming that the accuracy of specifying the position of the source of the elastic wave 13 is 10 mm, dt=1.68 [$\mu$sec]. Assuming that the measurement duration is 100 years, the bit length k of the time information (register) is $k \geq 51$ [bit]. Further, since the transmission packet of a general wireless module is basically transmitted in units of bytes, when the communicator 28 described later is implemented by a general-purpose wireless module, the bit length k of the time information (register) needs to be a multiple of 8. That is, a general-purpose wireless module can be used for transmitting time information by determining the bit length k of the time information (register) to be 56 bits = 7 bytes as a minimum multiple of 8 that satisfies $k \geq 51$ [bit].

The signal processor 27 controls the entire signal processing device 20. The signal processor 27 is configured using a processor such as a CPU and a memory. For example, the signal processor 27 generates detection information based on the signal after the filter processing and the analog-digital conversion processing output from the AFE 21.

The communicator 28 transmits the detection information generated by the signal processor 27 to the structure evaluation apparatus 30 at a predetermined timing. When the communicator 28 transmits the detection information by wireless communication, the so-called industry science medical band (ISM band) such as 2.4 GHz and 920 MHz band (915 MHz to 928 MHz in Japan) is used as the wireless frequency band.

As described above, since the signal processing device 20 is equipped with a self-sustaining power source, it is possible to improve the degree of freedom in portability and installability. For example, the signal processing device 20 equipped with such a self-sustaining power source can be installed on the girder of a bridge, and is suitable for long-term monitoring.

FIG. 3 is a schematic block diagram showing the function of AFE 21 according to the embodiment. The AFE 21 includes a receiver 211, a first filter 212, an analog-digital converter 213, and a second filter 214.

The receiver 211 receives the AE signal transmitted from the sensor 10. The receiver 211 outputs the received AE signal to the first filter 212. It is assumed that the time information detected by the sensor 10 is added to the AE signal.

The first filter 212 removes noise from the AE signal received by the receiver 211. For example, the first filter 212 removes a frequency band other than the specific frequency band from the AE signal as noise. The first filter 212 is, for example, a bandpass filter. The first filter 212 outputs an analog signal after noise removal (hereinafter referred to as "noise-removed analog signal") to the analog-digital converter 213.

The analog-digital converter 213 converts the analog signal into a digital signal by quantizing the noise-removed analog signal output from the first filter 212. The analog-digital converter 213 outputs a digital signal to the second filter 214.

The second filter 214 removes noise from the digital signal output from the analog-digital converter 213. The second filter 214 is a filter for removing noise. The second filter 214 outputs the digital signal after noise removal (hereinafter referred to as "noise-removed digital signal") to the controller 32.

In the following description, the processing performed in the AFE 21 will be referred to as preprocessing.

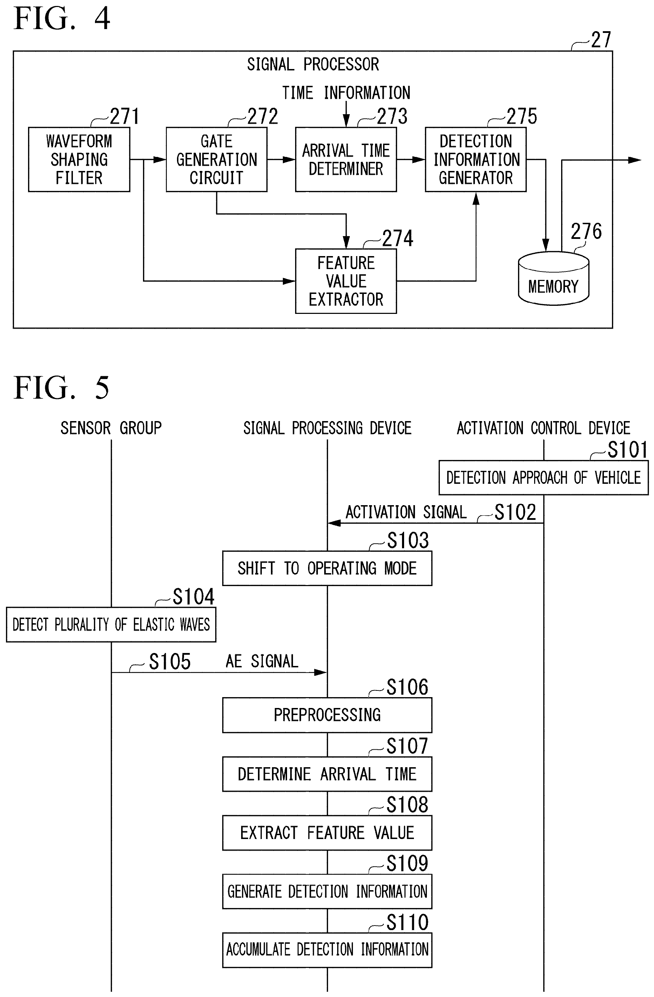

FIG. 4 is a schematic block diagram showing the functions of the signal processor 27 according to the embodiment. The signal processor 27 includes a waveform shaping filter 271, a gate generation circuit 272, an arrival time determiner 273, a feature value extractor 274, a detection information generator 275, and a memory 276.

The waveform shaping filter 271 removes noise components outside a predetermined band from the input digital signal. The waveform shaping filter 271 is, for example, a digital bandpass filter (BPF). The waveform shaping filter 271 outputs a digital signal after noise component removal (hereinafter referred to as "noise-removed signal") to the gate generation circuit 272 and the feature value extractor 274.

The gate generation circuit 272 inputs the noise-removed signal output from the waveform shaping filter 271. The gate generation circuit 272 generates a gate signal based on the input noise-removed signal. The gate signal is a signal indicating whether or not the waveform of the noise-removed signal is sustained.

The gate generation circuit 272 is implemented by, for example, an envelope detector and a comparator. The envelope detector detects the envelope of the noise-removed signal. The envelope is extracted, for example, by squaring a noise-removed signal and performing predetermined processing (for example, processing using a lowpass filter or Hilbert transform) on the squared output value. The comparator determines whether or not the envelope of the noise-removed signal is greater than or equal to a predetermined threshold value.

When the envelope of the noise-removed signal becomes equal to or larger than the predetermined threshold value, the gate generation circuit 272 outputs a first gate signal indicating that the waveform of the noise-removed signal is sustained to the arrival time determiner 273 and the feature value extractor 274. On the other hand, when the envelope of the noise-removed signal becomes less than the predetermined threshold value, the gate generation circuit 272 outputs a second gate signal indicating that the waveform of the noise-removed signal is not sustained to the arrival time determiner 273 and the feature value extractor 274.

The arrival time determiner 273 receives the time information generated by the time information generator 26 and the gate signal output from the gate generation circuit 272. The arrival time determiner 273 determines the arrival time of the elastic wave using the time information input while the first gate signal is being input. The arrival time determiner 273 outputs the determined elastic wave arrival time as time information to the detection information generator 275. The arrival time determiner 273 does not perform processing while the second gate signal is being input.

The feature value extractor 274 receives the noise-removed signal output from the waveform shaping filter 271 and the gate signal output from the gate generation circuit 272. The feature value extractor 274 extracts the feature value of the noise-removed signal using the noise-removed signal input while the first gate signal is being input. The feature value extractor 274 does not perform processing while the second gate signal is being input. The feature value is information indicating the feature of the noise-removed signal.

The feature value is, for example, the amplitude of the waveform [mV], the rise time of the waveform [$\mu$sec], the duration of the gate signal [$\mu$sec], the zero-cross count number [times], and the energy of the waveform [arb], the frequency [Hz], the root mean square (RMS) value, or the like. The feature value extractor 274 outputs parameters related to the extracted feature value to the detection information generator 275. When the feature value extractor 274 outputs the parameters related to the feature value, the sensor ID is associated with the parameter related to the feature value. The sensor ID represents identification information for identifying the sensor 10 installed in the region (hereinafter referred to as "evaluation region") to be evaluated for the soundness of the structure 11.

The amplitude of the waveform is information on the amplitude of the elastic wave 13, and is, for example, the value of the maximum amplitude in the noise-removed signal. The rise time of the waveform is, for example, the time T1 from the start of a rising edge of the gate signal to the time when the noise-removed signal reaches the maximum value. The duration of the gate signal is, for example, the time from the start of the rising edge of the gate signal until the amplitude becomes smaller than a preset value. The zero-cross count number is, for example, the number of times the noise-removed signal crosses a reference line passing through the zero value.

The energy of the waveform is, for example, a value obtained by time-integrating the square of the amplitude of the noise-removed signal at each time point. The definition of energy is not limited to the above example, and may be approximated using, for example, a waveform envelope. The frequency is the frequency of the noise-removed signal. The RMS value is, for example, the value of the square root of the amplitude of the noise-removed signal at each time point.

The detection information generator 275 receives the sensor ID, the time information, and the parameters related to the feature value. The detection information generator 275 generates detection information including the input sensor ID, time information, and parameters related to the feature value.

The memory 276 stores the detection information generated by the detection information generator 275. The memory 276 is, for example, a dual port random access memory (RAM). The memory 276 stores, for example, detection information for a period of two years or more.

FIG. 5 is a sequence diagram showing a flow of processing related to the accumulation of detection information in the structure evaluation system 100 of the embodiment. In FIG. 5, the sensors 10-1 to 10-P are collectively described as a sensor group. At the start of processing in FIG. 5, it is assumed that the signal processing device 20 is in the hibernation mode.

The activation control device 15 detects the approach of the vehicle 12 (step S101). The activation control device 15 generates an activation signal and outputs the generated activation signal to the signal processing device 20 (step S102).

The activation controller 22 of the signal processing device 20 receives the activation signal transmitted from the activation control device 15. The activation controller 22 activates the signal processor 27 according to the received activation signal. As a result, the signal processing device 20 shifts from the hibernation mode to the operating mode (step S103). The sensor group detects a plurality of elastic waves 13 (step S104). The sensor group converts the detected elastic wave 13 into an electric signal (AE signal). The sensor group transmits the electric signal (AE signal) to the signal processing device 20. Each time the sensor group detects the elastic wave 13, the elastic wave 13 is converted into an electric signal (AE signal) and transmitted to the signal processing device 20.

The AFE 21 performs preprocessing on the electric signal (AE signal) transmitted from the sensor group (step S106). Specifically, the AFE 21 performs filter processing and analog-digital conversion processing on the electric signal (AE signal). The AFE 21 outputs a noise-removed digital signal to the signal processor 27. The signal processor 27 receives the noise-removed digital signal output from the AFE 21, and determines the arrival time of the elastic wave 13 based on the input noise-removed digital signal (step S107). Further, the signal processor 27 extracts the feature value of the elastic wave 13 based on the input noise-removed digital signal (step S108). Here, the signal processor 27 extracts the feature value of the elastic wave 13 based on the noise-removed digital signal only when the first gate signal is output. On the other hand, the signal processor 27 does not extract the feature value from the noise-removed digital signal when the second gate signal is output.

The signal processor 27 generates detection information in which the arrival time of the elastic wave 13, the feature value, and the sensor ID are associated with each other (step S109). The generated detection information is stored in the memory 276 (step S110). As the processing in FIG. 5 is continuously performed, the detection information for at least the evaluation target period is accumulated in the memory 276.

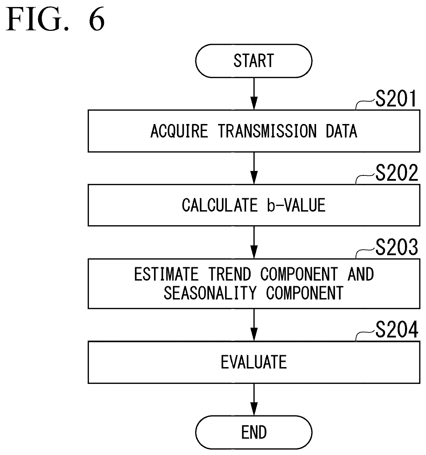

FIG. 6 is a flowchart showing a processing flow of the structure evaluation apparatus 30 according to the embodiment.

The acquirer 321 of the structure evaluation apparatus 30 requests the signal processing device 20 for the detection information for the evaluation target period via the communicator 31. As a result, the signal processing device 20 generates transmission data including the detection information for the evaluation target period, and the transmission data is transmitted to the structure evaluation apparatus 30. The acquirer 321 acquires the transmission data transmitted from the signal processing device 20 (step S201). The acquirer 321 stores the detection information for the evaluation target period included in the acquired transmission data in the storage 33.

The calculator 322 calculates the b-value every predetermined period (for example, for one day) based on the detection information for the evaluation target period stored in the storage 33 (step S202). Specifically, first, the calculator 322 reads the detection information for a certain day from the storage 33. Next, the calculator 322 calculates the b-value for each number of samples (for example, 500) used to obtain the b-value among the pieces of read detection information. The calculator 322 uses the value of the amplitude of the waveform included in the detection information when obtaining the b-value. The b-value calculated for each number of samples in this way is described as a candidate b-value. If there are 1500 pieces of detection information for a certain day, the calculator 322 will calculate three candidate b-values. The candidate b-value is one aspect of the candidate evaluation value. The larger the number of candidate b-values, the larger the fluctuation of the b-value in one day. Therefore, in order to suppress daily fluctuations, the calculator 322 calculates the b-value as the representative value of the day by obtaining the statistical value of the calculated candidate b-value. The statistical value may be a median value or an average value. The b-value as the representative value of the day obtained in this way is described as the daily b-value.

The calculator 322 performs the above-mentioned processing on the detection information for one day. As a result, the calculator 322 calculates the b-value for the evaluation target period every predetermined period (for example, for one day). On the other hand, as described above, in the measurement of the elastic wave 13, the timing at which the elastic wave 13 is obtained is irregular. Thus, depending on the date, there may be a case where the elastic wave 13 cannot be obtained, or even if the elastic wave 13 is obtained, the number of samples used to obtain the b-value is not enough. Therefore, the calculator 322 does not calculate the candidate b-value when the number of samples used to obtain the b-value is not enough. In that case, the calculator 322 also does not calculate the daily b-value. That is, it is not necessary to have the daily b-value on all the days of the evaluation target period, and the daily b-value may be obtained only on the day when the detection information is obtained. Assuming that the evaluation target period is one week starting from Sunday and the elastic wave 13 was not obtained on Wednesday and Friday, it may be sufficient that the daily b-values of five points of Sunday, Monday, Tuesday, Thursday, and Saturday are obtained.

The estimator 323 estimates the trend component and the seasonality component using an additive regression model based on the b-value every predetermined period obtained by the calculator 322 (step S203). As a specific process, taking the evaluation target period of one week (for example, the period in which the daily b-values of five points are obtained) as an example, the estimator 323 optimizes the parameters of the additive regression model so that the parameters can be expressed by the daily data of five points, which is intermittent time-series data, and the additive regression model represented by Equation (3) represented by the function of time. Considering the number of hours t as the number of elapsed days, the daily b-values of the five points of Sunday, Monday, Tuesday, Thursday, and Saturday in a week starting from Sunday correspond to the daily b-values of t = 0, 1, 2, 4, and 6, respectively, and can be expressed as b(t). The parameters of the additive regression model are optimized so that the error between the estimated value $b^{\wedge}(t)$ of the additive regression model at time t and the daily b-value b(t) obtained from the detection information is the smallest. As a result, the additive regression model can obtain the estimated value $b^{\wedge}(t)$ at an arbitrary time t. In the above example, it becomes possible to obtain the estimated values of Wednesday (t=3) and Friday (t=5) for which daily data could not be obtained. Further, since the trend component and the seasonality component are expressed as independent terms as in Equation (3), it is also possible to independently obtain the estimated value of the trend component and the estimated value of the seasonality component. Furthermore, it is possible to obtain future and past estimates outside the measurement period. In the above example, the value at t=7 on Sunday one week later can be obtained as an estimated value. The estimator 323 outputs the estimation result to the evaluator 324.

The evaluator 324 evaluates that the damage is progressing in the structure 11 when the trend component estimated by the estimator 323 is on a downward trend. When the seasonality component estimated by the estimator 323 fluctuates periodically, the evaluator 324 evaluates that a crack having a low progress is present inside the structure 11 (step S204). The evaluator 324 may display the evaluation result on the display 34. At this time, the evaluator 324 may display the graph of the trend component and the seasonality component and the evaluation result on the same screen.

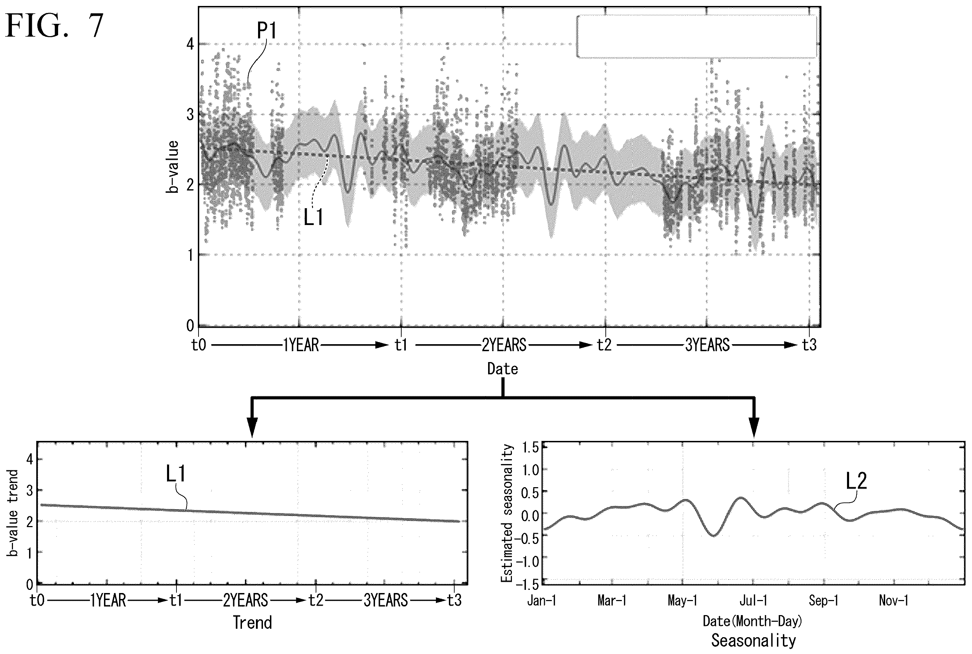

Next, the effect of the present embodiment will be described based on the experimental results of the inventors. FIG. 7 is a diagram showing an example of analysis results using b-value data for the evaluation target period. In the example shown in FIG. 7, the analysis result based on the elastic wave 13 obtained in three years is shown with the evaluation target period being three years. The point P1 shown in the upper figure of FIG. 7 represents the b-value, and the dotted line L1 represents the trend component. In FIG. 7, the period from the date and time t0 to the date and time t1 represents the analysis result using the b-value data of the first year in the evaluation target period, the period from the date and time t1 to the date and time t2 represents the analysis result using the b-value data of the second year in the evaluation target period, and the period from the date and time t2 to the date and time t3 represents the analysis result using the b-value data in the third year in the evaluation target period.

The result of separating the trend component and the seasonality component from the result shown in the upper figure of FIG. 7 is shown in the lower figure of FIG. 7. The straight line L1 shown in the lower figure of FIG. 7 represents a trend component, and the line segment L2 represents a seasonality component. As shown by the straight line L1, the trend component (Trend in FIG. 7) shows a gradual downward trend. As shown by the line segment L2, the seasonality component (Seasonality in FIG. 7) has a tendency that it increases in summer and decreases in winter. As shown in FIG. 7, long-term monitoring by the inventors revealed for the first time that seasonality fluctuations were observed inside the structure. It is difficult to confirm such seasonality fluctuations by the conventional evaluation method using the b-value obtained in a short period of time. Therefore, the evaluation method according to the present embodiment is an evaluation method that has not existed in the past, and analysis results that cannot be obtained in the past can be obtained. The long-term downward trend of the b-value shows a tendency that cracks are gradually increasing, and it can be estimated that the annual fluctuation is due to the shape change of the existing cracks due to the temperature change.

By drawing the change of the long-term trend as the change of the contour diagram (two-dimensional map) using the plurality of sensors 10, it is possible to visualize the region where the deterioration has progressed. Therefore, the evaluator 324 may generate a contour diagram complemented based on the Voronoi diagram using the b-value as the representative value at the sensor position based on the b-value at the date and time selected by the user and the installation position information of the sensor 10, and display the generated contour diagram on the display 44. Here, as the b-value to be selected, it is desirable to use the b-value related to the trend component. The b-value related to the trend component is a b-value that overlaps with a straight line L1 obtained using the data of the b-value obtained in the evaluation target period when the straight line L1 is drawn, for example, as shown in FIG. 7. The mother point of the Voronoi diagram is the installation position of the sensor 10.

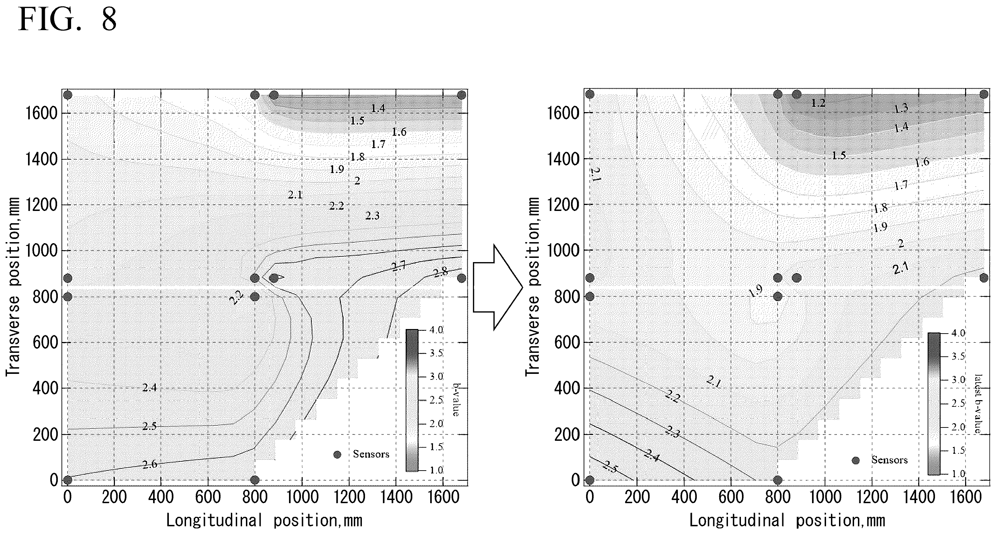

FIG. 8 shows an example of a contour diagram complemented based on the Voronoi diagram, with the b-value as a representative value at the sensor position. The black circles shown in FIG. 8 represent the installation position of the sensor 10. The left figure of FIG. 8 shows a contour diagram based on the b-value at the date and time t0, and the right figure of FIG. 8 shows a contour diagram based on the b-value at the date and time t3 (the date and time three years after the date and time t0). By comparing the left figure and the right figure of FIG. 8, it can be seen that the deterioration has expanded in the upper right region in the period of three years.

According to the structure evaluation system 100 configured as described above, when long-term monitoring of the structure 11 is performed using the b-value, the evaluation accuracy of the deterioration state of the structure 11 can be improved. Specifically, the structure evaluation system 100 calculates the daily b-value every predetermined period using the detection information for the evaluation target period, and evaluates the deterioration state of the structure 11 based on the time-series data of the daily b-value calculated every predetermined period. For example, if the evaluation target period is three years, the structure evaluation system 100 calculates the daily b-value every predetermined period using the detection information for three years. Even if the daily b-value is not calculated at all the dates and times within the evaluation target period, the structure evaluation system 100 uses the time-series data of the calculated daily b-value to determine the deterioration state of the structure. Therefore, even if the elastic wave 13 is not detected in a certain period, the tendency of damage can be evaluated by observing the time change of the b-value. Therefore, when long-term monitoring of the structure 11 is performed using the b-value, it is possible to improve the evaluation accuracy of the deterioration state of the structure 11.

In the structure evaluation system 100, a plurality of candidate b-values are calculated every predetermined period, and a representative value of the plurality of candidate b-values is calculated as a daily b-value. As a result, it is possible to suppress a decrease in evaluation accuracy due to fluctuations in the candidate b-values.

In the structure evaluation system 100, periodicity can be observed using the detection information for a period of two years or more as the evaluation target period. Therefore, it becomes easy to grasp the change of the b-value due to the change of the season, and it becomes possible to improve the evaluation accuracy of the deterioration state of the structure.

The structure evaluation system 100 evaluates the progress of damage inside the structure 11 based on the tendency of the trend component, and evaluates whether or not there is damage with low progress inside the structure 11 based on the seasonality component. In this way, the structure evaluation system 100 can grasp not only the progress of damage inside the structure 11 but also the change in damage due to the temperature change depending on the season. As a result, it can be utilized for future structural evaluation.

A modification of the structure evaluation system 100 will be described.

(Modification 1)

In the above-described embodiment, the target for applying the impact to the structure 11 is the vehicle 12, but the target for applying the impact to the structure 11 is not limited to the vehicle 12. The target for applying an impact to the structure 11 may be any object that can apply an impact to the structure 11 for a long period of time even if it is irregular. For example, the target for applying an impact to the structure 11 may be rain, water spraying, or manual impact.

(Modification 2)

By incorporating the temperature dependence into the additive regression model, it is possible to divide the annual fluctuation into a temperature-dependent component and a temperature-independent seasonality component s(t). In this case, the temperature-independent seasonality component may be, for example, a component caused by fluctuations in traffic volume throughout the year. Therefore, the estimator 323 may be configured to estimate the trend component and the seasonality component using an additive regression model shown in Equation (7) in which the temperature-dependent component is added to the trend component and the seasonality component as a multiplication term of the temperature data T(t) and the regression coefficient $\alpha$.

$$\hat{b}(t) = g(t) + s(t) + \alpha T(t) + \varepsilon t \qquad \cdots (7)$$

The estimator 323 may use humidity data instead of the temperature data T(t). Similarly, the estimator 323 may be configured to estimate the trend component and the seasonality component using an additive regression model shown in Equation (8) in which a multiplication term of the data x(t) obtained by sensing another physical quantity and the regression coefficient $\beta$ is added to Equation (7).

$$\hat{b}(t) = g(t) + s(t) + \alpha T(t) + \beta x(t) + \varepsilon t \qquad \cdots (8)$$

The other physical quantity is, for example, a traffic volume. In this way, the estimator 323 estimates the trend component and the seasonality component using an additive regression model in which a term proportional to at least one of temperature, humidity, and traffic volume is added in addition to the trend component and the seasonality component.

(Modification 3)

In the above-described embodiment, the b-value is described as an example of the evaluation value obtained by the slope of the amplitude scale-based frequency distribution, but the evaluation value obtained by the slope of the amplitude scale-based frequency distribution is not limited to this. For example, as the evaluation value obtained by the slope of the amplitude scale-based frequency distribution, the improved b-value described in Reference Document 1 below may be used. The improved b-value statistically determines the amplitude range based on the average $\mu$ of the amplitude and the standard deviation $\sigma$, and is utilized as one diagnostic index of soundness based on the AE method.

(Reference Document 1: Japanese Unexamined Patent Application, First Publication No. 2006-10595)

(Modification 4)

A part of the functional unit included in the structure evaluation apparatus 30 may be provided in another housing. For example, the structure evaluation apparatus 30 may include the communicator 31, the controller 32, and the storage 33, and the display 34 may be provided in another housing. When configured in this way, the controller 32 transmits the evaluation result to another housing. Then, the display 34 provided in another housing displays the evaluation result.

(Modification 5)

The signal processing device 20 and the structure evaluation apparatus 30 may be integrated.

(Modification 6)

In the above-described embodiment, the memory 276 is configured to store the detection information for the evaluation target period, but the detection information for the evaluation target period may be stored in the storage of another device. The storage of the other device may be, for example, a storage of a server provided on the cloud, or the storage 33 of the structure evaluation apparatus 30. When the detection information for the evaluation target period is stored in another storage, the signal processing device 20 transmits the detection information to another device when the detection information is obtained or the detection information for a certain period is stored in the memory 276. The certain period is shorter than the evaluation target period, for example, one week, one month, or the like. After transmitting the detection information to another device, the signal processing device 20 deletes the detection information stored in the memory 276. As a result, the capacity of the memory 276 can be suppressed. When the detection information for the evaluation target period is stored in the server provided on the cloud, the acquirer 321 of the structure evaluation apparatus 30 may acquire the detection information for the evaluation target period from the server.

(Modification 7)

The evaluator 324 may be configured to further perform an evaluation in consideration of the b-value in the evaluation based on the trend component. Even if the trend component shows a downward trend, if the b-value is a large value to some extent, it can be considered that there is little damage, that is, immediate repair or the like is unnecessary. With reference to Table 1 of Reference Document 2 below, it is stated that when the b-value is 1.7 or more, it is considered that there is little damage. Therefore, the evaluator 324 evaluates that when the trend component shows a downward trend and the b-value is larger than 1.7, damage is progressing in the structure 11, but no immediate action is required. Further, when the trend component shows a downward trend and the b-value is 1.2 < b-value < 1.7, the evaluator 324 evaluates that damage is progressing in the structure 11, but no immediate action is required. Further, the evaluator 324 evaluates that when the trend component shows a downward trend and the b-value is less than 1.2, damage is progressing in the structure 11 and immediate action is required.

(Reference Document 2: I. S. Colombo, I. Main, and M. Forde, "Assessing Damage of Reinforced Concrete Beam Using "b-value" Analysis of Acoustic Emission Signals", Journal of materials in civil engineering, vol. 15, no. 3, pp. 280-286, 2003)

(Modification 8)

The acquirer 321 may be configured to further acquire information on the vehicle 12 traveling on the structure 11 (hereinafter referred to as "vehicle information"). The vehicle information is, for example, vehicle type information of the vehicle 12 that has traveled on the structure 11 during the evaluation target period, and traffic volume information of the vehicle 12 on the structure 11. The vehicle type information of the vehicle 12 includes at least information on the tread width of the vehicle 12. The traffic volume information of the vehicle 12 is information indicating how many vehicles 12 of which vehicle type have passed through the structure 11 during the evaluation target period. The acquirer 321 may acquire vehicle information by input of a user, or may acquire vehicle information from a server that stores traffic information. When configured in this way, the calculator 322 may calculate the b-value for each vehicle type every predetermined period. The estimator 323 estimates the trend component and the seasonality component for each vehicle type using the time-series data of each b-value calculated by the calculator 322 for each vehicle type. The evaluator 324 evaluates the deterioration state of the structure 11 based on the time-series data of each b-value calculated every predetermined period.

(Modification 9)

In the above-described embodiment, the configuration in which the signal processing device 20 is equipped with a self-sustaining power source is shown. On the other hand, although the degree of freedom in portability and installability is reduced, the signal processing device 20 may be configured to operate using a commercial power source without mounting a self-sustaining power source. When configured in this way, the signal processing device 20 does not have to include the power source unit 23.

(Modification 10)

In the above-described embodiment, the configuration in which the detection information generator 275 generates detection information including a sensor ID, time information, and parameters related to feature quantities is shown. In order to calculate the b-value, it is sufficient to have at least information on the amplitude of the waveform. Further, when calculating the b-value for a certain period, it is sufficient to have information on the amplitude of the waveform and time information of the elastic wave. That is, the detection information generator 275 does not need to generate detection information including all the parameters related to the feature value. Therefore, the detection information generator 275 may generate detection information including the time information and the information on the amplitude of the waveform.

According to at least one embodiment described above, the structure evaluation system includes the plurality of sensors 10 for detecting elastic waves generated from a structure, the memory 276 that stores detection information in which information on at least the amplitude of each elastic wave detected by each of the plurality of sensors 10 is associated with the time information on the time when each elastic wave is detected, the calculator 322 that calculates the b-value every predetermined period based on the detection information for the evaluation target period stored in the memory 276, and the evaluator 324 that evaluates the deterioration state of the structure 11 based on the time-series data of each b-value calculated every predetermined period. Thus, when long-term monitoring of the structure **11** is performed using the evaluation value obtained by the slope of the amplitude scale-based frequency distribution, it is possible to improve the evaluation accuracy of the deterioration state of the structure 11.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

**Claims**

1.  A structure evaluation system (100) comprising:

    a plurality of sensors (10-1 to 10-P) configured to detect elastic waves generated from a structure;
    an acquirer configured to acquire detection information for an evaluation target period in which information on at least an amplitude of each elastic wave detected by each of the plurality of sensors (10-1 to 10-P) is associated with time information on the time when each elastic wave is detected;
    a calculator (322) configured to calculate a b-value or an improved b-value, obtained by the slope of an amplitude scale-based frequency distribution of the elastic waves, as an evaluation value every predetermined period based on the acquired detection information for the evaluation target period;
    an estimator (323) configured to estimate a trend component which represents the component for evaluating a long-term damage trend of a structure and a seasonality component which represents the component for evaluating a seasonal damage variation using time-series data of each evaluation value; and
    an evaluator (324) configured to evaluate a deterioration state of the structure in each of the estimated trend component and seasonality component.

2.  The structure evaluation system (100) according to claim 1, wherein
    the calculator (322) calculates a plurality of candidate evaluation values every predetermined period, and calculates a representative value of the plurality of candidate evaluation values every predetermined period as the evaluation value.

3. The structure evaluation system (100) according to claims 1 or 2, wherein
the estimator (323) estimates the trend component and the seasonality component by applying an additive regression model.

4. The structure evaluation system (100) according to claim 3, wherein
the estimator (323) estimates the trend component by an interval linear model and the seasonality component by a Fourier series.

5. The structure evaluation system (100) according to any one of claims 1 to 4, wherein
the evaluator (324) evaluates that damage is progressing in the structure when the trend component is on a downward trend.

6. The structure evaluation system (100) according to any one of claims 1 to 5, wherein
the evaluator (324) evaluates that low-progressive damage is inside the structure when the seasonality component fluctuates periodically.

7. The structure evaluation system (100) according to claim 3 or 4, wherein
the estimator (323) estimates the trend component and the seasonality component using an additive regression model in which a term proportional to sensor data of a predetermined physical quantity is added in addition to the trend component and the seasonality component.

8. The structure evaluation system (100) according to claim 7, wherein
the estimator (323) estimates the trend component and the seasonality component using an additive regression model in which a term proportional to at least one of a temperature, a humidity, and a traffic volume is added in addition to the trend component and the seasonality component.

9. The structure evaluation system (100) according to any one of claims 1 to 8, wherein

the evaluation target period is a period of 2 years or more, and
the calculator (322) calculates the evaluation value on a daily basis based on the detection information for a period of at least 2 years among the detection information for a period of 2 years or more.

10. The structure evaluation system (100) according to any one of claims 1 to 9, further comprising:

a display (34) configured to display information, wherein
the evaluator (324) generates a two-dimensional map using the evaluation value as a representative value at an installation position of each sensor, and displays the generated two-dimensional map on the display,
wherein X-axis in the two-dimensional map represents a vehicle traveling direction, which is a direction in which a vehicle travels, and Y-axis in the two-dimensional map represents a direction orthogonal to the vehicle traveling direction, which is orthogonal to the vehicle traveling direction.

11. A structure evaluation method comprising:

acquiring (S201) detection information for an evaluation target period in which information on at least an amplitude of each elastic wave detected by each of a plurality of sensors (10-1 to 10-P) that detects elastic waves generated from a structure is associated with time information on the time when each elastic wave is detected;
calculating (S202) a b-value or an improved b-value, obtained by the slope of an amplitude scale-based frequency distribution of the elastic waves, as an evaluation value every predetermined period based on the acquired detection information for the evaluation target period;
estimating a trend component which represents the component for evaluating a long-term damage trend of a structure and a seasonality component which represents the component for evaluating a seasonal damage variation using time-series data of each evaluation value; and
evaluating a deterioration state of the structure in each of the estimated trend component and seasonality component.

**EP 4 239 330 B1**

**Patentansprüche**

1. Ein Strukturbewertungssystem (100), das Folgendes umfasst:

   eine Vielzahl von Sensoren (10-1 bis 10-P), die so konfiguriert sind, dass sie von einer Struktur erzeugte elastische Wellen erfassen;
   eine Erfassungsvorrichtung, die so konfiguriert ist, dass sie Erfassungsinformationen für einen Bewertungszielzeitraum erfasst, in dem Informationen über mindestens eine Amplitude jeder elastischen Welle, die von jedem der mehreren Sensoren (10-1 bis 10-P) erfasst wird, mit Zeitinformationen über den Zeitpunkt verknüpft werden, zu dem jede elastische Welle erfasst wird;
   einen Rechner (322), der so konfiguriert ist, dass er einen b-Wert oder einen verbesserten b-Wert, der durch die Steigung ein Amplitudenskalen-basierten Frequenzverteilung der elastischen Wellen erhalten ist, als Bewertungswert in jedem vorbestimmten Zeitraum auf der Grundlage der erfassten Erfassungsinformationen für den Bewertungszielzeitraum berechnet;
   einen Schätzer (323), der so konfiguriert ist, dass er eine Trendkomponente, die die Komponente zur Bewertung eines langfristigen Schadensverlaufs einer Struktur darstellt, und eine Saisonkomponente, die die Komponente zur Bewertung einer saisonalen Schadensschwankung darstellt, unter Verwendung von Zeitreihendaten jedes Bewertungswerts schätzt; und
   einen Bewerter (324), der so konfiguriert ist, dass er einen Verschlechterungszustand der Struktur in jeder der geschätzten Trendkomponente und Saisonkomponente bewertet.

2. Strukturbewertungssystem (100) gemäß Anspruch 1, wobei
   der Rechner (322) in jedem vorbestimmten Zeitraum mehrere Kandidatenbewertungswerte berechnet und in jedem vorbestimmten Zeitraum einen repräsentativen Wert der mehreren Kandidatenbewertungswerte als den Bewertungswert berechnet.

3. Strukturbewertungssystem (100) gemäß Anspruch 1 oder 2, wobei
   der Schätzer (323) die Trendkomponente und die Saisonkomponente durch Anwendung eines additiven Regressionsmodells schätzt.

4. Strukturbewertungssystem (100) gemäß Anspruch 3, wobei
   der Schätzer (323) die Trendkomponente durch ein Intervall-Linearmodell und die Saisonkomponente durch eine Fourier-Reihe schätzt.

5. Strukturbewertungssystem (100) gemäß einem der Ansprüche 1 bis 4, wobei
   der Bewerter (324) bewertet, dass sich der Schaden in der Struktur fortschreitet, wenn die Trendkomponente einen Abwärtstrend aufweist.

6. Strukturbewertungssystem (100) gemäß einem der Ansprüche 1 bis 5, wobei
   der Bewerter (324) bewertet, dass sich ein geringfügiger fortschreitender Schaden innerhalb der Struktur befindet, wenn die Saisonkomponente periodisch schwankt.

7. Strukturbewertungssystem (100) gemäß Anspruch 3 oder 4, wobei
   der Schätzer (323) die Trendkomponente und die Saisonkomponente unter Verwendung eines additiven Regressionsmodells schätzt, bei dem zusätzlich zu der Trendkomponente und der Saisonkomponente ein Term hinzugefügt wird, der proportional zu Sensordaten einer vorbestimmten physikalischen Größe ist.

8. Strukturbewertungssystem (100) gemäß Anspruch 7, wobei
   der Schätzer (323) die Trendkomponente und die Saisonkomponente unter Verwendung eines additiven Regressionsmodells schätzt, in dem zusätzlich zu der Trendkomponente und der Saisonkomponente ein Term hinzugefügt wird, der proportional zu mindestens einer der Größen Temperatur, Feuchtigkeit und Verkehrsaufkommen ist.

9. Strukturbewertungssystem (100) nach einem der Ansprüche 1 bis 8, wobei

   der Bewertungszielzeitraum ein Zeitraum von 2 Jahren oder mehr ist und
   der Rechner (322) den Bewertungswert auf Tagesbasis auf der Grundlage der Erfassungsinformationen für einen Zeitraum von mindestens 2 Jahren unter den Erfassungsinformationen für einen Zeitraum von 2 Jahren oder mehr berechnet.

10. Strukturbewertungssystem (100) gemäß einem der Ansprüche 1 bis 9, das ferner umfasst:

eine Anzeige (34), die zum Anzeigen von Informationen konfiguriert ist, wobei
der Bewerter (324) eine zweidimensionale Karte unter Verwendung des Bewertungswerts als repräsentativen Wert an einer Installationsposition jedes Sensors erzeugt und die erzeugte zweidimensionale Karte auf der Anzeige anzeigt,
wobei die X-Achse in der zweidimensionalen Karte eine Fahrzeugfahrrichtung darstellt, die eine Richtung ist, in der ein Fahrzeug fährt, und die Y-Achse in der zweidimensionalen Karte eine Richtung orthogonal zur Fahrzeugfahrrichtung darstellt, die orthogonal zur Fahrzeugfahrrichtung ist.

11. Ein Verfahren zur Strukturbewertung, das Folgendes umfasst:

Erfassen (S201) von Erfassungsinformationen für einen Bewertungszielzeitraum, in dem Informationen über mindestens eine Amplitude jeder elastischen Welle, die von jedem einer Vielzahl von Sensoren (10-1 bis 10-P) erfasst wird, die von einer Struktur erzeugte elastische Wellen erfassen, mit Zeitinformationen über den Zeitpunkt verknüpft sind, zu dem jede elastische Welle erfasst wird;
Berechnen (S202) eines b-Werts oder eines verbesserten b-Werts, der durch die Steigung ein Amplitudenskalen-basierten Frequenzverteilung der elastischen Wellen erhalten ist, als Bewertungswert in jedem vorbestimmten Zeitraum auf der Grundlage der erfassten Erfassungsinformationen für den Bewertungszielzeitraum;
Schätzen einer Trendkomponente, die die Komponente zur Bewertung eines langfristigen Schadensverlaufs einer Struktur darstellt, und einer Saisonkomponente, die die Komponente zur Bewertung einer saisonalen Schadensschwankung darstellt, unter Verwendung von Zeitreihendaten jedes Bewertungswerts; und
Bewerten eines Verschlechterungszustands der Struktur in jeder der geschätzten Trendkomponente und Saisonkomponente.

**Revendications**

1. Système d'évaluation de structure (100) comprenant :

une pluralité de capteurs (10-1 à 10-P) configurés pour détecter des ondes élastiques générées à partir d'une structure ;
un dispositif d'acquisition configuré pour acquérir des informations de détection pour une période cible d'évaluation dans laquelle des informations sur au moins une amplitude de chaque onde élastique détectée par chacun de la pluralité de capteurs (10-1 à 10-P) sont associées à des informations temporelles sur le moment où chaque onde élastique est détectée ;
un calculateur (322) configuré pour calculer une valeur b ou une valeur b améliorée, obtenue par la pente d'une distribution de fréquence basée sur une échelle d'amplitude des ondes élastiques, en tant qu'une valeur d'évaluation à chaque période prédéterminée sur la base des informations de détection acquises pour la période cible d'évaluation ;
un estimateur (323) configuré pour estimer une composante de tendance qui représente la composante pour évaluer une tendance à long terme de dommage d'une structure et une composante de saisonnalité qui représente la composante pour évaluer une variation saisonnière de dommage à l'aide de données de série temporelle de chaque valeur d'évaluation ; et
un évaluateur (324) configuré pour évaluer un état de détérioration de la structure dans chacune de la composante de tendance et de la composante de saisonnalité estimées.

2. Système d'évaluation de structure (100) selon la revendication 1, dans lequel
le calculateur (322) calcule une pluralité de valeurs d'évaluation candidates à chaque période prédéterminée, et calcule une valeur représentative de la pluralité de valeurs d'évaluation candidates à chaque période prédéterminée en tant que la valeur d'évaluation.

3. Système d'évaluation de structure (100) selon les revendications 1 ou 2, dans lequel
l'estimateur (323) estime la composante de tendance et la composante de saisonnalité en appliquant un modèle de régression additive.

4. Système d'évaluation de structure (100) selon la revendication 3, dans lequel
l'estimateur (323) estime la composante de tendance par un modèle linéaire à intervalle et la composante de saisonnalité par une série de Fourier.

5. Système d'évaluation de structure (100) selon l'une quelconque des revendications 1 à 4, dans lequel l'évaluateur (324) évalue que des dommages progressent dans la structure lorsque la composante de tendance est à la baisse.

6. Système d'évaluation de structure (100) selon l'une quelconque des revendications 1 à 5, dans lequel l'évaluateur (324) évalue que des dommages peu progressifs sont présents à l'intérieur de la structure lorsque la composante de saisonnalité fluctue périodiquement.

7. Système d'évaluation de structure (100) selon la revendication 3 ou 4, dans lequel
l'estimateur (323) estime la composante de tendance et la composante de saisonnalité à l'aide d'un modèle de régression additive dans lequel un terme proportionnel aux données de capteur d'une quantité physique prédéterminée est ajouté en plus de la composante de tendance et de la composante de saisonnalité.

8. Système d'évaluation de structure (100) selon la revendication 7, dans lequel
l'estimateur (323) estime la composante de tendance et la composante de saisonnalité à l'aide d'un modèle de régression additive dans lequel un terme proportionnel à au moins un parmi une température, une humidité et un volume de trafic est ajouté en plus de la composante de tendance et de la composante de saisonnalité.

9. Système d'évaluation de structure (100) selon l'une quelconque des revendications 1 à 8, dans lequel

la période cible d'évaluation est une période de 2 ans ou plus, et
le calculateur (322) calcule la valeur d'évaluation sur une base quotidienne sur la base des informations de détection pour une période d'au moins 2 ans parmi les informations de détection pour une période de 2 ans ou plus.

10. Système d'évaluation de structure (100) selon l'une quelconque des revendications 1 à 9, comprenant en outre :

un écran (34) configuré pour afficher des informations, dans lequel
l'évaluateur (324) génère une carte bidimensionnelle en utilisant la valeur d'évaluation comme valeur représentative à une position d'installation de chaque capteur, et affiche la carte bidimensionnelle générée sur l'écran, dans lequel un axe X de la carte bidimensionnelle représente une direction de déplacement de véhicule, qui est une direction dans laquelle un véhicule se déplace, et un axe Y de la carte bidimensionnelle représente une direction orthogonale à la direction de déplacement de véhicule, qui est orthogonale à la direction de déplacement de véhicule.

11. Procédé d'évaluation de structure comprenant :

l'acquisition (S201) d'informations de détection pour une période cible d'évaluation dans laquelle des informations sur au moins une amplitude de chaque onde élastique détectée par chacun d'une pluralité de capteurs (10-1 à 10-P) qui détectent des ondes élastiques générées à partir d'une structure sont associées à des informations temporelles sur le moment où chaque onde élastique est détectée ;
le calcul (S202) d'une valeur b ou d'une valeur b améliorée, obtenue par la pente d'une distribution de fréquence basée sur une échelle d'amplitude des ondes élastiques, en tant qu'une valeur d'évaluation à chaque période prédéterminée sur la base des informations de détection acquises pour la période cible d'évaluation ;
l'estimation d'une composante de tendance qui représente la composante pour évaluer une tendance à long terme de dommage d'une structure et d'une composante de saisonnalité qui représente la composante pour évaluer une variation saisonnière de dommage à l'aide données de série temporelle de chaque valeur d'évaluation ; et
l'évaluation d'un état de détérioration de la structure dans chacune de la composante de tendance et de la composante de saisonnalité estimées.

FIG. 1

# FIG. 2

SIGNAL PROCESSING DEVICE ~20

CLOCK OSCILLATOR ~25 → TIME INFORMATION GENERATOR ~26

AE SIGNAL → AFE ~21 →

⋮

AE SIGNAL → AFE ~21 →

SIGNAL PROCESSOR ~27 → COMMUNICATOR ~28 →

ACTIVATION SIGNAL → ACTIVATION CONTROLLER ~22

POWER SUPPLY UNIT ~24

POWER SOURCE UNIT ~23

# FIG. 3

AFE ~21

RECEIVER ~211 → FIRST FILTER ~212 → ANALOG-DIGITAL CONVERTER ~213 → SECOND FILTER ~214

# FIG. 4

```
                        SIGNAL PROCESSOR                           27

                     TIME INFORMATION
          271          272     │  273              275

   ┌──────────┐  ┌──────────┐  ┌──────────┐  ┌──────────┐
   │ WAVEFORM │  │   GATE   │  │ ARRIVAL  │  │DETECTION │
   │ SHAPING  │─▶│GENERATION│─▶│   TIME   │─▶│INFORMATION│──▶
   │  FILTER  │  │ CIRCUIT  │  │DETERMINER│  │GENERATOR │
   └──────────┘  └──────────┘  └──────────┘  └──────────┘
                                                   ▲
                          │                                    │
                          │                   274
                          ▼                                   276
                     ┌──────────┐
                     │ FEATURE  │                         ┌────────┐
                     │  VALUE   │─────────────────────────│ MEMORY │
                     │EXTRACTOR │                         └────────┘
                     └──────────┘
```

# FIG. 5

```
  SENSOR GROUP      SIGNAL PROCESSING DEVICE    ACTIVATION CONTROL DEVICE
                                                                    S101
                                              ┌───────────────────────────────┐
                                              │  DETECTION APPROACH OF VEHICLE │
                                              └───────────────────────────────┘
                                  ACTIVATION SIGNAL    S102
                              ◀───────────────────────
                                         S103
                              ┌───────────────────────┐
                              │  SHIFT TO OPERATING MODE │
                              └───────────────────────┘
                     S104
  ┌─────────────────────────────┐
  │ DETECT PLURALITY OF ELASTIC WAVES │
  └─────────────────────────────┘
              S105        AE SIGNAL
           ───────────────────────▶
                                         S106
                              ┌───────────────────────┐
                              │      PREPROCESSING      │
                              └───────────────────────┘
                                         S107
                              ┌───────────────────────┐
                              │  DETERMINE ARRIVAL TIME │
                              └───────────────────────┘
                                         S108
                              ┌───────────────────────┐
                              │   EXTRACT FEATURE VALUE │
                              └───────────────────────┘
                                         S109
                              ┌───────────────────────┐
                              │ GENERATE DETECTION INFORMATION │
                              └───────────────────────┘
                                         S110
                              ┌───────────────────────┐
                              │ ACCUMULATE DETECTION INFORMATION │
                              └───────────────────────┘
```

FIG. 6

```
        ┌─────────────┐
        │    START    │
        └─────────────┘
               │
               ▼                    ⌐S201
   ┌──────────────────────────────┐
   │   ACQUIRE  TRANSMISSION  DATA │
   └──────────────────────────────┘
               │
               ▼                    ⌐S202
   ┌──────────────────────────────┐
   │      CALCULATE  b-VALUE       │
   └──────────────────────────────┘
               │
               ▼                    ⌐S203
   ┌──────────────────────────────┐
   │  ESTIMATE  TREND  COMPONENT AND│
   │     SEASONALITY  COMPONENT    │
   └──────────────────────────────┘
               │
               ▼                    ⌐S204
   ┌──────────────────────────────┐
   │          EVALUATE            │
   └──────────────────────────────┘
               │
               ▼
        ┌─────────────┐
        │     END     │
        └─────────────┘
```

FIG. 7

EP 4 239 330 B1

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006010595 A

**Non-patent literature cited in the description**

- Advanced structural health monitoring of concrete structures with the aid of acoustic emission. **BEHNIA ARASH et al.** CONSTRUCTION AND BUILDING MATERIALS. ELSEVIER, 22 May 2014, vol. 65, 282-302

- **I. S. COLOMBO** ; **I. MAIN** ; **M. FORDE**. Assessing Damage of Reinforced Concrete Beam Using "b-value" Analysis of Acoustic Emission Signals. *Journal of materials in civil engineering*, 2003, vol. 15 (3), 280-286